# EUROPÄISCHE PATENTSCHRIFT

(11) **EP 0 731 007 B1**
(45) Veröffentlichungstag und Bekanntmachung des Hinweises auf die Patenterteilung: **04.02.1998**
(21) Anmeldenummer: 96102804.0
(22) Anmeldetag: 24.02.1996
(51) Int. Cl.: B60R 25/04

(54) **Verfahren zur Sicherung von Fahrzeugen, insbesondere Leasing- oder Mietfahrzeugen, vor unbefugter Nutzung**
Vehicle security method for preventing unauthorised use, particularly for leased or rented vehicles
Procédé de sécurité pour prévenir une utilisation non-autorisée d'un véhicule, en particulier en cas de prêt ou de location de véhicules

(30) Priorität: 10.03.1995 DE 19508370
(43) Veröffentlichungstag der Anmeldung: 11.09.1996
(73) Patentinhaber: DAIMLER-BENZ AKTIENGESELLSCHAFT, 70567 Stuttgart (DE)
(72) Erfinder: Rick, Thomas, 71522 Backnang (DE); Wagner, Peter, 73630 Remshalden (DE); Lenart, Siegleif, 71394 Kernen (DE)

(56) Entgegenhaltungen:
- EP-A- 0 377 816
- EP-A- 0 451 482
- DE-A- 4 440 975
- GB-A- 2 271 000
- NL-A- 9 202 255
- PATENT ABSTRACTS OF JAPAN vol. 017, no. 560 (P-1627), 8.Oktober 1993 & JP-A-05 159143 (OMRON CORP), 25.Juni 1993,

## Beschreibung

Die Erfindung betrifft ein Verfahren zur Sicherung von Fahrzeugen, insbesondere Leasing oder Mietfahrzeugen, vor unbefugter Nutzung, wie es beispielsweise aus der EP 0 712 768 A (Stand der Technik gemäß Autikel 54 (3) EPU) als bekannt hervorgeht.

Gemäß dieser Schrift ist in dem Fahrzeug ein Diebstahlschutzsteuergerät und eine Empfangseinrichtung eines mobilen Kommunikationssystems angeordnet. Eine Kommunikationsstruktur seitens des Fahrzeugs ermöglicht zum einen den Austausch von Daten zwischen einem Diebstahlschutzsteuergerät und der Empfangseinrichtung und andererseits den Austausch von Daten zwischen dem Diebstahlschutzsteuergerät und zumindest einem betriebsnotwendigen Steuergerät des Fahrzeugs. Von einer Zentrale werden, solange ein Fahrzeug nicht als gestohlen gemeldet oder sofern nicht eine andere unbefugte Nutzung des Fahrzeugs festgestellt wurde, in regelmäßigen zeitlichen Abständen über das mobile Kommunikationssystem Signale an das Fahrzeug übermittelt, die von der Empfangseinrichtung empfangen werden. Der Empfang der Signale wird von der Empfangseinrichtung über die Kommunikationsstruktur an das Diebstahlschutzsteuergerät weitergeleitet. Die Signale werden erkannt und wenn sie als an das Fahrzeug gerichtet erkannt werden, so wird der Fahrzeugbetrieb für eine vorgegebene Zeitdauer, die größer ist als der zeitliche Abstand zweier aufeinanderfolgender Signale, freigegeben. Wird vor Ablauf des Zeitraums, für den der Fahrzeugbetrieb freigegeben ist, kein Signal empfangen, so wird die Freigabe des Fahrzeugbetriebs nicht verlängert, das Diebstahlschutzsteuergerät steuert dann über die Kommunikationsstruktur das zumindest eine betriebsnotwendige Steuergerät an und verhindert den weiteren Betrieb dieses Steuergeräts zumindest bei dem nächsten Versuch, das Fahrzeug in Betrieb zu nehmen.

Durch diese Maßnahme wird verhindert, daß ein Fahrzeug über einen längeren Zeitraum hinweg unbefugt benutzt wird. Auch ist der Betrieb nicht von vom Fahrzeug abgesandten Signalen, die gestört werden können, abhängig, sondern ausschließlich von dem Empfang der von der Zentrale ausgesandten Signale, so daß ein Stören bzw. Zerstören des Kommunikationssystems keine verlängerte Nutzung des Fahrzeugs erlaubt. Nachteilig an diesem Verfahren ist es, daß es nicht möglich ist, das Fahrzeug zu orten. Daher ist es beispielsweise nach dem Entwenden des Fahrzeugs weiterhin möglich das Fahrzeug ungefährdet auf einem Transporter an einen anderen Ort zu verbringen. Ferner kann zwischen dem Zeitpunkt des Beginns der unbefugten Nutzung des Fahrzeugs und der Weiterleitung der Information über die unbefugte Benutzung an die Zentrale ein längerer Zeitraum vergehen, so daß das Aussenden der Signale erst einen beträchtlichen Zeitraum nach Beginn der unbefugten Benutzung erfolgen kann. Während dieses Zeitraums kann die unbefugte Nutzung des Fahrzeugs ungehindert fortgesetzt werden. Ferner ist, wenn eine große Anzahl von Fahrzeugen erforderlich ist eine sehr große Sendekapazität für die in regelmäßigen zeitlichen Abständen ausgesandten Signale erforderlich. Deshalb ist dieses Verfahren nur dazu geeignet, eine eng begrenzte Anzahl von Fahrzeugen zu sichern.

Desweiteren ist es beispielsweise aus dem Artikel "Satellitenhilfe gegen Auto-Klau" von R. Gramm in der Zeitschrift Funkschau Heft 16/1993 Seiten 42 bis 45 bekannt, ein fahrzeugseitig angeordnetes Ortungssystem vorzusehen, das laufend oder in regelmäßigen Abständen den geographischen Ort bestimmt, an dem sich das Fahrzeug befindet und das diese Ortsangaben über eine fahrzeugseitige Sendeeinrichtung an eine Zentrale weiterleitet. In dieser Zentrale ist eine Empfangseinheit zum Empfang und zum Auswerten der von der Sendeeinrichtung ausgesandten Ortsangaben vorhanden. In der Zentrale kann somit laufend bzw. in regelmäßigen Abständen der Ort des Fahrzeugs überwacht werden.

Diese Einrichtung hat den Nachteil, daß sie es nicht erlaubt, den Betrieb des Fahrzeugs zu unterbinden. Die Verfolgung des Fahrzeugs durch die Zentrale kann auch beispielsweise durch Zerstörung der fahrzeugseitigen Sendeeinrichtung oder des Ortungssystems verhindert werden. Ferner muß eine große Kapazität an Sendeeinrichtungen und Sendefrequenzen bereitgestellt werden, wenn laufend eine große Anzahl von Fahrzeugen verfolgt werden soll. Wird als mobiles Kommunikationssystem beispielsweise ein digitales Funktelefon genutzt fallen hohe Kommunikationsgebühren an um laufend die Ergebnisse der Ortung des Fahrzeugs an die Zentrale weiterzuleiten.

Desweiteren beschreibt die DE 42 24 536 A1 eine Anlage zur geographisch definierten Begrenzung des Bewegungsraums von Fahrzeugen. Dabei werden mittels eines Empfängers Signale von Satelliten empfangenen, welche im Fahrzeug zu Positionskoordinaten umgesetzt und mit definierten Vorgaben verglichen werden. Verläßt ein Fahrzeug einen vorher definierten geographischen Raum, so wird über eine Auswerteeinheit eine das Antriebssystem steuernde Motronik blockiert und gleichzeitig über eine Übertragungseinheit der aktuelle Standort des Fahrzeugs an eine Leitstelle übermittelt.

Als nachteilig wird dabei empfunden, daß die Begrenzung des Bewegungsraums im voraus definiert werden muß und während der Benutzungsdauer nicht ohne weiteres geändert werden kann. Zudem wird als nachteilig empfunden, daß nur Maßnahmen für den Fall getroffen werden, daß das Fahrzeug einen bestimmten geographischen Raum verläßt; dies kann für bestimmte Anwendungen nicht ausreichend sein. Desweiteren sind keine Maßnahmen für den Fall vorgesehen, daß der Empfänger manipuliert oder zerstört wird.

Als zusätzlicher Stand der Technik sei die DE 43 20 174 A1 angeführt, welche ein Sicherungsverfahren für den Betrieb eines Kraftfahrzeugs durch den berechtigten Benutzer beschreibt. Dabei sendet ein Fahrzeug ein Prüfsignal an eine Zentrale, welche mit einem Bestättigungssignal antwortet. Wird das Bestättigungssignal vom Fahrzeug nicht empfangen, so wird, außer in bestimmten Ausnahmefällen, eine Betriebssperre ausgelöst, welche den Betrieb des Fahrzeugs unmöglich macht.

Bei Miet- oder Leasingfahrzeugen, sowie bei anderen Fahrzeugen, die nicht vom Halter selbst genutzt werden, aber auch bei Taxen oder Lastkraftwagen, ist die Gefahr einer unbefugten Nutzung besonders groß.

Aufgabe der Erfindung ist es, die unbefugte Nutzung eines Fahrzeugs, insbesondere eines Miet- oder Leasingfahrzeugs, zuverlässig zu verhindern.

Diese Aufgabe wird bei einem gattungsgemäßen Verfahren zur Sicherung von Fahrzeugen vor unbefugter Nutzung erfindungsgemäß mit den Merkmalen des Anspruchs 1 oder des Anspruchs 2 gelöst, wobei die Merkmale der Unteransprüche vorteilhafte Aus- und Weiterbildungen kennzeichnen.

Die Nutzung des Fahrzeugs ist nur dann möglich, wenn vor der Überlassung des Fahrzeugs (bei Taxen, Lastkraftwagen vor Antritt einer Fahrt) eine bidirektionale Kommunikation zwischen Fahrzeug und Zentrale stattfindet und auch zu einem späteren Zeitpunkt stattfinden kann. Dadurch ist es nicht nur möglich ausschließlich eine Positionsmeldung des Fahrzeugs an die Zentrale zu übertragen oder ausschließlich von der Zentrale Freigabesignale an das Fahrzeug zu übertragen sondern es ist möglich die Kommunikation bedarfsgerecht zu gestalten. Vor der Überlassung des Fahrzeugs muß die Nutzungsbeschränkung des Fahrzeugs definiert werden. Erst wenn diese definiert ist, ist der Betrieb des Fahrzeugs möglich.

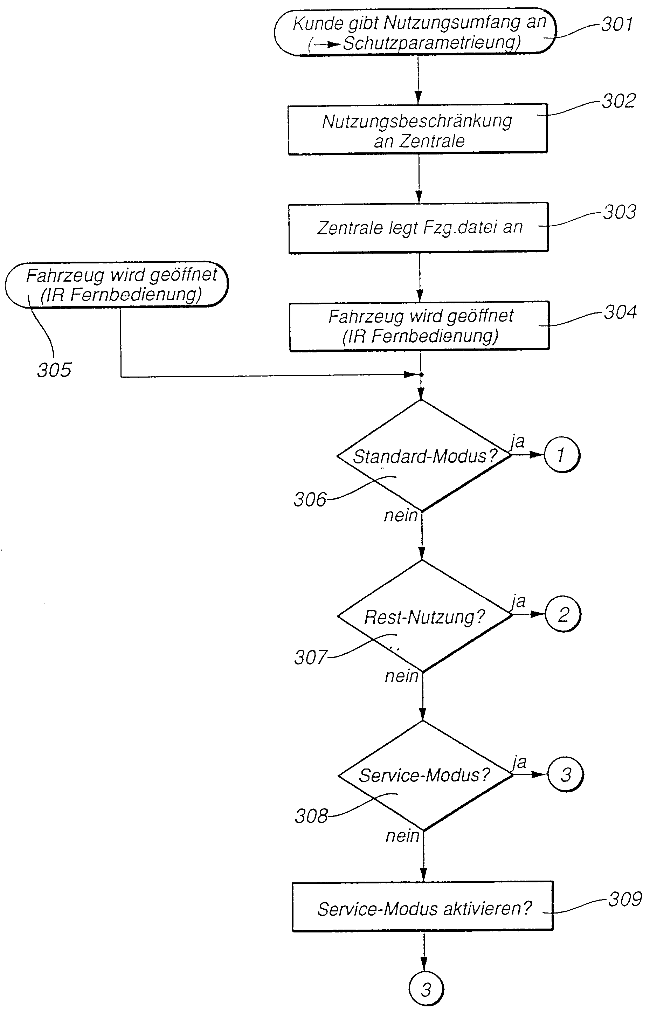

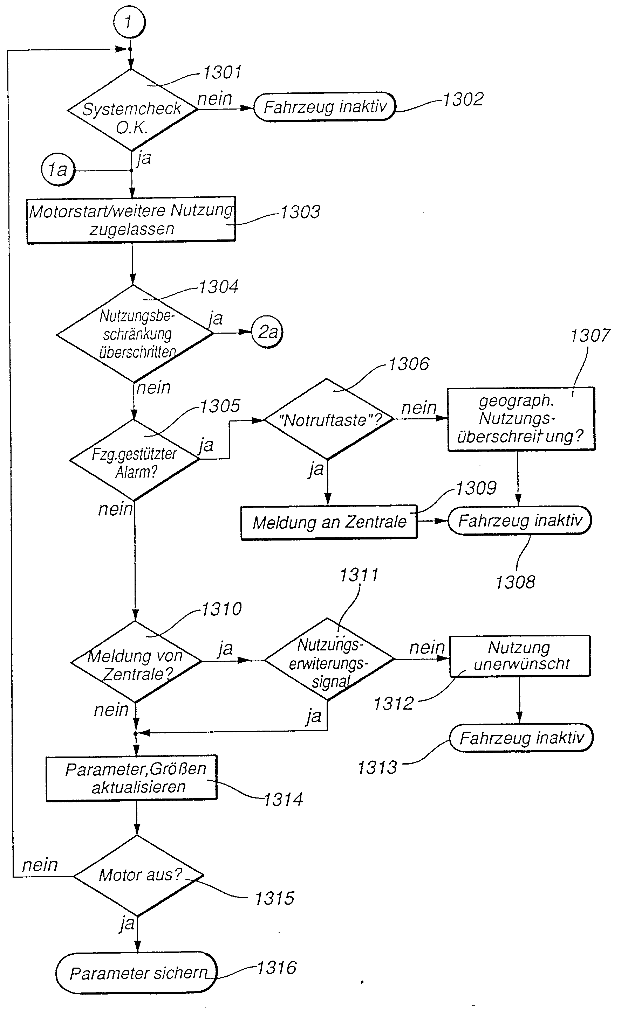

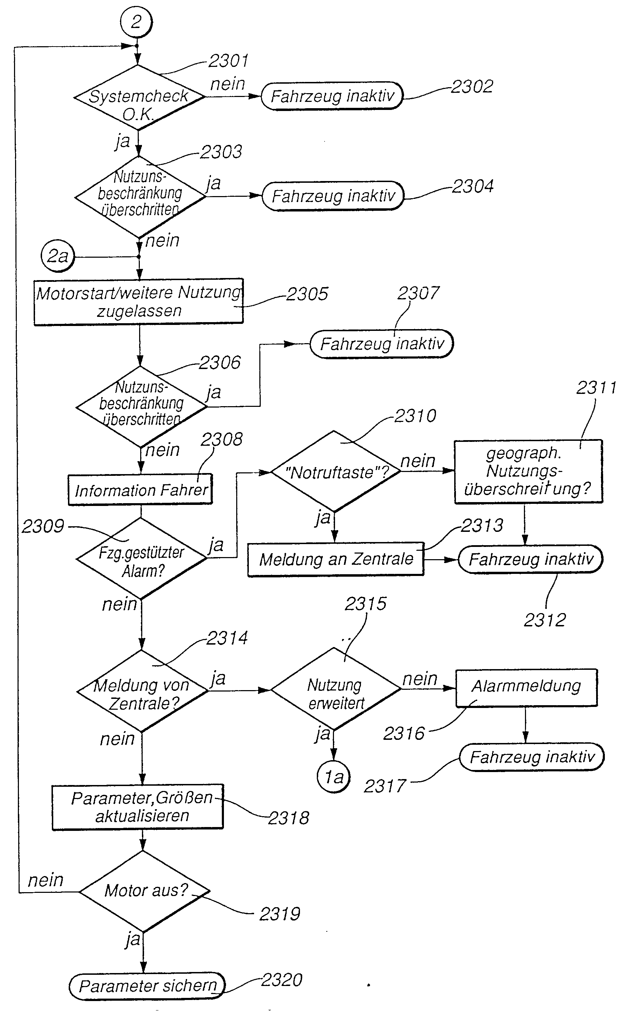

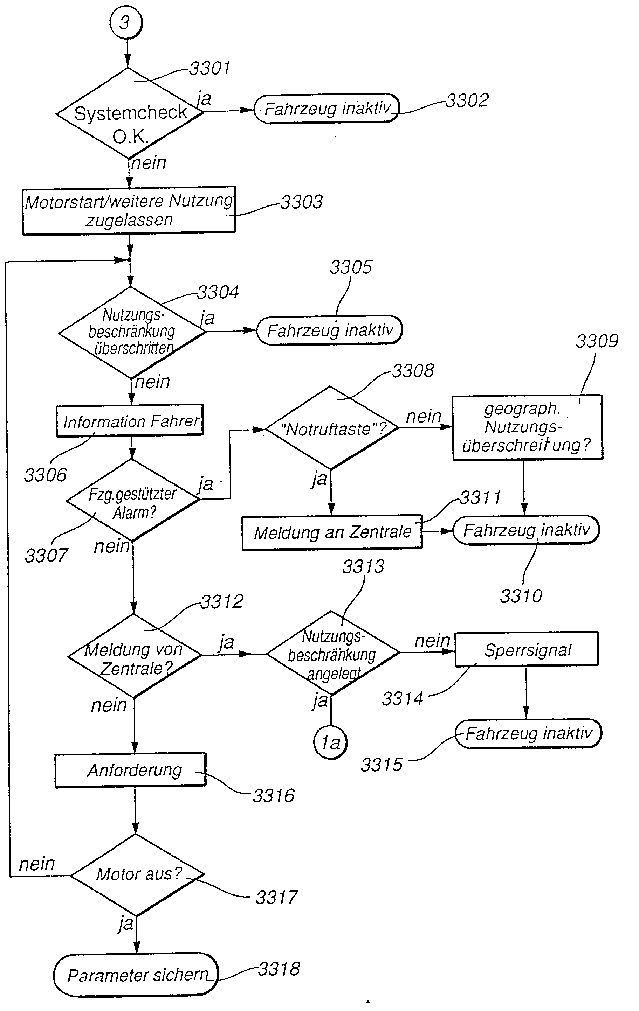

Im übrigen ist die Erfindung an Hand eines in der Zeichnung dargestellten Ausführungsbeispieles nachfolgend noch erläutert; dabei zeigt die einzige Figur das Flußdiagramm eines Verfahrens, zur Sicherung von Fuhrparkfahrzeugen, wie Mietfahrzeugen, vor unbefugter Nutzung.

Zur Durchführung muß in dem Fahrzeug folgende Infrastruktur gegeben sein. Eine Sendeeinrichtung und eine Empfangseinrichtung zum Übermitteln von Daten zwischen dem Fahrzeug und einer Zentrale. Die Sendeeinrichtung und die Empfangseinrichtung können zu einem mobilen Kommunikationssystem zusammengefaßt sein. Es kann sich dabei zum Beispiel um ein Mobiltelefon handeln, das digitale Daten überträgt, wie z.B. D-Netz-Telefone. Die fahrzeugseitige Telefonanlage muß allerdings dazu in der Lage sein, selbsttätig eine Verbindung mit der Zentrale herzustellen. Um währenddessen die Geprächsfähigkeit des Telefons zu erhalten, sollte die aufgebaute Verbindung (jegliche Form von Datenaustausch) im Hintergrund eventuell von Fahrzeuginsassen durchgeführter Gespräche durchgeführt werden können. Die Datenübertragung bzw. die Übertragung von Signalen zwischen dem Fahrzeug und der Zentrale und umgekehrt erfolgt dabei stets in codierter (chiffriert, etc.) Form um zu verhindern, daß Dritte entsprechende Signale aussenden können, die von der Zentrale als von einem Fahrzeug kommend, oder von dem Fahrzeug als von der Zentrale kommend gewertet werden. Die von Fahrzeug und Zentrale ausgesandten Signale müssen stets eine fahrzeugspezifische Kennung aufweisen, um eine Verwechslung zwischen Fahrzeugen zu verhindern und nicht fälschlicherweise bei einem falschen Fahrzeug eine Nutzungsbeschränkung umzudefinieren.

Ferner wird in dem Fahrzeug eine Kommunikationsstruktur benötigt, die eine Kommunikation der Sendeeinrichtung und der Empfangseinrichtung mit dem Nutzungsschutzsteuergerät und mindestens einem betriebsnotwendigen Steuergerät ermöglicht. Als Kommunikationsstruktur können Datenbusse wie z.B. CAN, VAN oder D2B dienen. Auch die Übermittlung der Daten über die Kommunikationsstruktur kann in kodierter Form erfolgen.

Zur Ortung wird in dem Fahrzeug ein Ortungssystem wie beispielsweise GPS (Global Positioning System) benötigt. Auch dieses ist über die Kommunikationsstruktur des Fahrzeugs mit dem Nutzungsschutzsteuergerät verbunden.

Dabei kann das Nutzungsschutzsteuergerät oder die Gesamtheit der an die Kommunikationsstruktur angeschlossenen Steuergeräte laufend Überprüfungen der Systemintegrität vornehmen und bei einem Angriff auf die Systemintegrität die Außerbetriebnahme von mindestens einem betriebsnotwendigen Steuergerät und das Absetzen von Ortssignalen veranlassen.

Die Figur zeigt das Flußdiagramm eines erfindungsgemäßen Verfahrens, das besonders zur Verwendung in Fuhrparkfahrzeugen, wie Taxen, Mietfahrzeugen oder Leasingfahrzeugen und nachfolgend als Mietfahrzeuge bezeichnet, geeignet ist. Insbesondere kann die Mietdauer oder Betriebsdauer überschritten werden. Das Überschreiten einer festgelegten maximalen Fahrstrecke kann ebenfalls eine unbefugte Nutzung sein. Auch Gebietsbeschränkungen oder der Ausschluß des Verbringens des Fahrzeugs in bestimmte Gebiete kann eine unbefugte, vertragswidrige Nutzung darstellen. Die Möglichkeiten einer unbefugten Nutzung sind also vielfältiger als bei Privatfahrzeugen. Ferner muß der Vermieter flexibel auf die Wünsche seines Kunden reagieren können und in einfacher Weise auch nachträglich die Weiterbenutzung des Fahrzeugs ermöglichen können.

Bei dem Mietfahrzeug wird gemäß Schritt 301 vor jeder einzelnen Vermietung eine Vereinbarung zwischen dem Vermieter und dem Mieter über die Nutzung des Fahrzeugs getroffen. Gemäß dem Schritt 302 erfolgt vom Vermieter eine Mitteilung an die Zentrale über die vereinbarte Nutzung des Fahrzeugs. In der Zentrale werden gemäß Schritt 303 die Daten über die vereinbarte Nutzungsbeschränkung des Fahrzeugs in der diesem Fahrzeug zugeordneten, Datei abgespeichert und die Einhaltung der Nutzungsbeschränkungen wird überwacht. Die Überwachung der Nutzungsbeschränkung kann somit sowohl fahrzeugseitig als auch von der Zentrale aus erfolgen. Im folgenden ist die Erfindung anhand einer Überwachung der Nutzungsbeschränkung im Fahrzeug selbst beschrieben, wobei dann zwischen der Zentrale und dem Fahrzeug nur dann eine Kommunikation erforderlich ist, wenn entweder die Nutzungsbeschränkung überschritten ist oder wenn die in dem Fahrzeug abgelegte Nutzungsbeschränkung geändert wurde. Eine Änderung kann dabei sowohl eine Einschränkung als auch eine Erweiterung der Nutzungsbeschränkung sein. Alternativ ist es auch möglich, daß die Überwachung der Nutzungsbeschränkung in der Zentrale erfolgt. Dann müßte vom Fahrzeug in Abhängigkeit von bestimmten Kriterien (beispielsweise alle 2 Betriebsstunden einmal, bei jeder Inbetriebnahme des Fahrzeugs, alle 200 km Fahrleistung oder mindestens 3 mal täglich), ein Meldesignal, das neben der Fahrzeugidentifikation alle einer Nutzungsbeschränkung unterliegenden im Fahrzeug gemessenen oder bestimmten Größen beinhaltet, an die zentrale ausgesandt werden. Die Zentrale beantwortet das Meldesignal dann mit einem Freigabesignal, wenn ein Überschreiten der Nutzungsberechtigung nicht festgestellt wurde. Empfängt das Fahrzeug das Freigabesignal nicht, so fällt es zunächst in die Rest-Nutzung, bei Ablauf der während der Rest-Nutzung tolerierten weiteren Nutzung des Fahrzeugs, erfolgt die Außerbetriebnahme des Fahrzeugs mittels der Außerbetriebnahme mindestens eines betriebsnotwendigen Steuergeräts.

Beim Öffnen des Fahrzeugs mit dem Schlüssel nach Schritt 304 oder 305 erfolgt im Schritt 306 eine Abfrage ob eine Standard-Nutzung des Fahrzeugs vorliegt. Die Standard-Nutzung liegt dann vor, wenn eine Nutzung außerhalb der Nutzungsvereinbarung noch nicht festgestellt wurde. Liegt eine Standard-Nutzung vor, so wird zum Schritt 1301 gesprungen. Andernfalls wird im Schritt 307 abgefragt, ob eine Rest-Nutzung des Fahrzeugs vorliegt. Eine Rest-Nutzung des Fahrzeugs ist dann gegeben, wenn eine Nutzung über die Nutzungsvereinbarung hinaus festgestellt wurde, dem Mieter des Fahrzeugs jedoch vor der Außerbetriebnahme des Fahrzeugs Zeit und Gelegenheit gegeben werden soll, eine Vereinbarung über eine Nutzungserweiterung mit dem Vermieter zu treffen. Liegt eine Rest-Nutzung vor, so wird zum Schritt 2301 gesprungen. Andernfalls wird im Schritt 308 überprüft, ob der Service-Modus aktiviert ist. Der Service-Modus soll den Betrieb des Fahrzeugs für die notwendigen Fahrzeugbewegungen beispielsweise zum Rangieren, Bereitstellen, Abstellen und Warten des Fahrzeugs ermöglichen. Er ist nicht aktivierbar, solange eine Nutzung des Fahrzeugs bei der Zentrale angemeldet ist. Ferner erlaubt er nur einen sehr eingeschränkten Betrieb, beispielsweise innerhalb eines eng eingegrenzten geographischen Gebiets oder nur über eine Fahrstrecke von wenigen Kilometern. Ist der Service-Modus schon aktiviert, so wird zum Schritt 3301 gesprungen. Andernfalls wird zuerst der Service-Modus aktiviert und dann zum Schritt 3301 gesprungen.

Die Schritte 1301 bis 1316 umfassen die Uberprüfung, wie sie im Standard-Modus durchgeführt wird. Gemäß Schritt 1301 wird eine Systemüberprüfung durchgeführt. Dabei wird beispielsweise überprüft, ob die Integrität des Systems verletzt wurde. Ist dies der Fall, so wird zum Schritt 1302 gesprungen. Eine Inbetriebnahme des Fahrzeugs wird durch Außerbetriebnahme von mindestens einem betriebsnotwendigen Steuergerät verhindert. Ein Ortssignal kann ausgesendet werden.

Wurde im Schritt 1301 festgestellt, daß das fahrzeugseitige System ordnungsgemäß arbeitet, so wird gemaß Schritt 1303 die Inbetriebnahme des Fahrzeugs bzw. dessen weitere Nutzung zugelassen. Im Schritt 1304 wird überprüft, ob die Nutzungsbeschränkung überschritten wurde. Wird vom Fahrzeug ein Überschreiten der Nutzungsbeschränkung festgestellt, so wird die Rest-Nutzung des Fahrzeugs aktiviert. Dazu wird zum Schritt 2305 gesprungen. Da die Schritte 1305 bis 1309, 2309 bis 2313 und 3307 bis 3311 einander entsprechen, werden sie nur einmal anhand der Schritte 1305-1309 beschrieben.

Liegt ein Überschreiten der Nutzungsbeschränkung nicht vor, so wird gemäß dem Schritt 1305 überprüft, ob ein fahrzeuggestützer Alarm vorliegt. Ein fahrzeuggestützer Alarm liegt dann vor, wenn beispielsweise eine willkürliche Betätigung einer dafür vorgesehenen Schalteinrichtung durch einen Insassen des Fahrzeugs oder ein Überschreiten der geographischen Nutzungsbeschränkung festgestellt wird. Liegt ein fahrzeuggestützer Alarm nicht vor, so wird zum Schritt 1310 gesprungen.

Andernfalls erfolgt gemäß Schritt 1309 eine entsprechende Meldung durch das Fahrzeug an die Zentrale. Das Aussenden dieser Meldung ist für die Insassen des Fahrzeugs nicht feststellbar. Gleichzeitig mit der Meldung kann ein Ortssignal von dem Fahrzeug an die Zentrale übermittelt werden. Diese Vorgehensweise ermöglicht es beispielsweise dem Fahrer im Pannenfall oder bei Unfällen in einfacher Weise Hilfe anzufordern. Gegebenenfalls kann auch eine Gesprächsverbindung zwischen dem Fahrer und der Zentrale automatisch hergestellt werden. Die Betätigung der Schalteinrichtung ("Notfallschalter") kann auch einen Sprung zum Schritt 1308 zur Folge haben, wenn nach dem Aussenden der Meldung an die Zentrale eine Außerbetriebnahme des Fahrzeugs erwünscht ist. Ansonsten wird im Schritt 1307 überprüft, ob ein Verlassen eines bestimmten geographischen Gebiets oder das Einfahren in ein bestimmtes, von der Nutzung ausgeschlossenes geographisches Gebiet vorliegt. Ist dies der Fall, so wird gemäß dem Schritt 1308 die Inbetriebnahme des Fahrzeugs nach der nächsten Außerbetriebnahme des Fahrzeugs verhindert, indem zumindest dann mindestens ein betriebsnotwendiges Steuergerät außer Betrieb genommen wird. Alternativ kann der Fahrzeugbetrieb progressiv beendet werden, indem beispielsweise die Fahrleistungen des Fahrzeugs über die Motorsteuerung und/oder ggf. die Getriebesteuerung progressiv abgesenkt werden, bis das Fahrzeug langsam den Stillstand erreicht. Bei Stillstand des Fahrzeugs kann dann mindestens ein betriebsnotwendiges Steuergerät (Motorsteuerung, Getriebesteuerung) außer Betrieb genommen werden. Das Fahrzeug ist stillgesetzt. Dies verhindert, daß das Fahrzeug nach dem Ermitteln, daß ein weiterer Betrieb des Fahrzeugs nicht mehr erwünscht wird, noch während eines längeren Zeitraums weiterbewegt wird. Mit Eingang des Sperrsignals kann zusätzlich periodisch in einer festgelegten zeitlichen Abfolge ein aktuelles Ortssignal ausgesandt werden. Die zeitlich festgelegte Abfolge besteht aus zwei kurz nacheinander, beispielsweise innerhalb weniger als einer Minute oder sogar weniger als 30 Sekunden, abgesandten Ortssignalen und einer sich daran anschließenden Wartezeit ohne Aussenden eines Ortssignals. Das zweimalige kurz hintereinander stattfindende Aussenden des Ortssignals soll es der Zentrale erlauben, nicht nur den aktuellen Ort des Fahrzeugs sondern auch seine Fahrtrichtung zu bestimmen. Der minimale zeitliche Abstand ist dabei nach unten durch die Auflösung des Ortungssystems festgelegt. Die sich anschließende Wartezeit soll so gering gewählt werden, daß einerseits ein vernünftiges Verfolgen des Fahrzeugs von der Zentrale aus ermöglicht wird und andererseits eine Überlastung der Zentrale durch einen zu großen Dateneingang vermieden wird. Das Überschreiten einer georgraphischen Nutzungsbeschränkung wird somit gemäß diesem Beispiel nicht so nachsichtig wie ein Überschreiten anderer Nutzungsbeschränkungen behandelt. Es hat die sofortige Außerbetriebnahme nach einem der Verfahren gemäß dem Schritt 1308 zur Folge. Eine Rest-Nutzung während der ein Arrangement zwischen Fahrer und Zentrale getroffen werden kann ist nicht gegeben.

Da die Schritte 1310 bis 1313, 2314 bis 2317 und 3312 bis 3315 einander entsprechen, werden sie nur einmal anhand der Schritte 1305-1309 beschrieben. Im Schritt 1310 wird überprüft, ob von dem Fahrzeug ein von der Zentrale ausgesandtes Signal empfangen wurde. Ist dies der Fall, so wird gemäß dem Schritt 1311 überprüft, ob das empfangene Signale einem Nutzungserweiterungssignal entspricht. Ist dies der Fall so wird zum Schritt 1314 gesprungen. Sonst wird im Schritt 1312 festgestellt, daß eine weitere Nutzung des Fahrzeugs nicht erfolgen soll. Gemäß dem Schritt 1313 wird dann analog zum Schritt 1308 das Fahrzeug außer Betrieb genommen.

Im Schritt 1314 werden die aktuellen Werte der Nutzungsbeschränkungsparameter sowie die Werte einer Nutzungsbeschränkung unterliegender Größen aktualisiert. Im Schritt 1315 wird überprüft, ob das Fahrzeug von dem Fahrer außer Betrieb genommen wurde. Ist dies der Fall, so werden gemäß Schritt 1316 die aktuellen Werte der Nutzungsbeschränkungsparameter sowie die Werte einer Nutzungsbeschränkung unterliegender Größen abgespeichert. Andernfalls wird zum Schritt 1301 zurückgesprungen.

Das Verfahren gemäß den Schritten 2301 bis 2320 entspricht in weiten Teilen der Vorgehensweise nach den Schritten 1301 bis 1316. Allerdings liegt eine Rest-Nutzung des Fahrzeugs vor. Während dieser Rest-Nutzung liegt zwar ein Überschreiten der Nutzungsbeschränkung vor, jedoch wird vorübergehend eine weitere Nutzung des Fahrzeugs toleriert. Erst wenn während dieser Rest-Nutzung keine Erweiterung der Nutzungsberechtigung vorgenommen wird, wird das Fahrzeug außer Betrieb genommen.

Die Schritte 2301 und 2302 entsprechen den Schritten 1301 und 1302. Im Schritt 2303 wird überprüft, ob eine weitere Nutzung des Fahrzeugs noch toleriert wird. Ist dies nicht der Fall, so wird gemäß Schritt 2304 eine Inbetriebnahme des Fahrzeugs verhindert.

Ansonsten wird gemäß Schritt 2305 der weitere Betrieb des Fahrzeugs bzw. die Inbetriebnahme des Fahrzeugs zugelassen. In dem Schritt 2306 wird überprüft, ob eine weitere Nutzung des Fahrzeugs noch toleriert wird. Ist dies nicht der Fall, so wird gemäß Schritt 2307 das Fahrzeug analog zu einer der in Schritt 1308 aus Bl. 2 beschriebenen Vorgehensweisen außer Betrieb genommen. Ansonsten ergeht gemäß dem Schritt 2308 mit optischen oder akustischen Mitteln eine Aufforderung an den Fahrer, sich mit der Zentrale in Verbindung zu setzen. Dabei kann die verbleibende Rest-Nutzung vor der Außerbetriebnahme des Fahrzeugs dem Fahrer mitgeteilt werden. Zudem kann während der Restnutzung eine Verbindung zwischen Fahrer und Zentrale hergestellt werden. Gleichzeitig kann auch ein Ortssignal ausgesendet werden. In den Schritten 2309 bis 2313 wird analog zu der Vorgehensweise in den Schritten 1305 bis 1309 vorgegangen. Die Vorgehensweise in den Schritten 2314 bis 2317 entspricht dem Vorgehen bei den Schritten 1310 bis 1313, wobei im Unterschied zum Schritt 1311, dann, wenn im Schritt 2315 der Empfang eines Nutzungserweiterungssignals festgestellt wird, nicht zum Schritt 2318 sondern zum Schritt 1303 gesprungen wird. Der Empfang eines Nutzungserweiterungssignals bedeutet, daß von der Zentrale aus das Fahrzeug zur weiteren Nutzung freigegeben wurde. Dies geschieht dann, wenn der Fahrer sich mit der Zentrale in Verbindung gesetzt hat und ein Einvernehmen über die weitere Nutzung des Fahrzeugs getroffen wurde.

Im Schritt 2318 werden die aktuellen Werte der Nutzungsbeschränkungsparameter sowie die Werte einer Nutzungsbeschränkung unterliegender Größen aktualisiert. Im Schritt 2319 wird überprüft, ob das Fahrzeug von dem Fahrer außer Betrieb genommen wurde. Ist dies der Fall, so werden gemäß Schritt 2320 die aktuellen Werte der Nutzungsbeschränkungsparameter sowie die Werte einer Nutzungsbeschränkung unterliegender Größen abgespeichert. Andernfalls wird zum Schritt 2301 zurückgesprungen.

Die Schritte 3301 bis 3318 stellen den Service-Modus dar. Der Service-Modus ist ein Rückfallbetriebsmodus, der dann durchgeführt wird, wenn eine Nutzung des Fahrzeugs bei der Zentrale nicht angemeldet ist. Er ermöglicht den Betrieb des Fahrzeugs für die Zwecke des Vermieters.

Gemäß Schritt 3301 wird eine Systemüberprüfung durchgeführt. Dabei wird beispielsweise überprüft, ob die Integrität des Systems verletzt wurde. Ist dies der Fall, so wird zum Schritt 3302 gesprungen. Eine Inbetriebnahme des Fahrzeugs wird durch Außerbetriebnahme von mindestens einem betriebsnotwendigen Steuergerät verhindert. Ein Ortssignal kann ausgesendet werden.

Andernfalls wird gemäß dem Schritt 3303 die Inbetriebnahme bzw. der weitere Betrieb des Fahrzeugs zugelassen. Im Schritt 3304 wird dann überprüft, ob der weitere Betrieb des Fahrzeugs toleriert wird. Ist dies nicht der Fall, so wird im Schritt 3305 nach einer der im Schritt 1308 beschriebenen Vorgehensweisen das Fahrzeug außer Betrieb genommen.

Gemäß dem Schritt 3306 wird ein Ortssignal von dem Fahrzeug ausgesendet. Eine Information über die verbleibende mögliche Nutzung des Fahrzeugs kann dem Fahrer angezeigt werden. Die Schritte 3307 bis 3311 entsprechen den Schritten 1305 bis 1309. Die Schritte 3312 bis 3315 entsprechen den Schritten 1310 bis 1313. Im Unterschied zu dem Schritt 1311 wird in dem Schritt 3313 abgefragt ob eine Nutzungsbeschränkung in der Zentrale angemeldet wurde, das heißt ob eine mögliche Nutzung des Fahrzeugs in der Zentrale durch den Vermieter angemeldet und registriert wurde. Ist dies der Fall, so wird zu dem Schritt 1303 gesprungen.

Im Schritt 3316 wird eine Anforderung zum Übersenden einer Nutzungsbeschränkung an die Zentrale ausgesandt, die nur beantwortet wird, wenn entsprechende Daten vom Vermieter bei der Zentrale eingegangen sind. Im Schritt 3317 wird überprüft, ob das Fahrzeug von dem Fahrer außer Betrieb genommen wurde. Ist dies der Fall, so werden gemäß Schritt 3318 die aktuellen Werte der Nutzungsbeschränkungsparameter sowie die Werte einer Nutzungsbeschränkung unterliegender Größen abgespeichert. Andernfalls wird zum Schritt 3304 zurückgesprungen.

Ist ein Fahrzeug einmal dadurch außer Betrieb gesetzt worden, daß ein betriebsnotwendiges Steuergerät auf Veranlassung des Nutzungsschutzsteuergeräts, außer Betrieb genommen wurde, so kann die Wiederinbetriebnahme des Fahrzeugs beispielsweise dadurch erfolgen, daß die Empfangseinrichtung weiterbetrieben wird und beim Empfang eines Betriebsfreigabesignal, das von der Zentrale ausgesandt werden kann, dieses an das Nutzungsschutzsteuergerät weitergeleitet wird. Das Nutzungsschutzsteuergerät prüft das Signal und wenn es als gültig erkannt wird hebt es die Sperrungen der betriebsnotwendigen Steuergeräte auf. Das Fahrzeug ist wieder fahrbereit. Das Aussenden des Betriebsfreigabesignals durch die Zentrale erfolgt beispielsweise dann, wenn durch eine Behörde oder den Eigentümer des Fahrzeugs eine entsprechende Meldung bei der Zentrale eingeht.

Alternativ oder zusätzlich dazu kann vorgesehen werden, daß die Wiederinbetriebnahme nur dann erfolgt, wenn über eine mit dem Nutzungsschutzsteuergerät verbundenen Dateneingabeschnittstelle ein von diesem als gültig erkannter Code eingegeben wird. Dabei ist es von Vorteil, wenn die Anzahl der einen entsprechenden Code erzeugenden Geräte gering ist und sie einer Kontrolle durch die Zentrale unterliegen.

## Patentansprüche

1. Verfahren zur Sicherung von Fahrzeugen, insbesondere Leasing- oder Mietfahrzeugen, vor unbefugter Nutzung,
wobei fahrzeugseitig eine Kommunikationsstruktur den Datenaustausch zumindest zwischen einer Empfangseinrichtung, einem Nutzungsschutzsteuergerät und mindestens einem betriebsnotwendigen Steuergerät ermöglicht,
wobei die Empfangseinrichtung von einer Zentrale ausgesandte Daten empfängt, deren Empfang den Betrieb des Fahrzeugs ermöglicht und deren Ausbleiben eine Außerbetriebnahme des mindestens einen betriebsnotwendigen Steuergeräts zur Folge hat,
wobei, die von der Zentrale ausgesandten Daten die Nutzungsbeschränkungen für das Fahrzeug definieren, und
wobei das Nutzungsschutzsteuergerät das Überschreiten einer Nutzungsbeschränkung überprüft,
wobei dann, wenn ein Überschreiten einer Nutzungsbeschränkung vorliegt, die Außerbetriebnahme des mindestens einen betriebsnotwendigen Steuergeräts erfolgt.

2. Verfahren zur Sicherung von Fahrzeugen, insbesondere Leasing- oder Mietfahrzeugen, vor unbefugter Nutzung,
wobei fahrzeugseitig eine Kommunikationsstruktur den Datenaustausch zumindest zwischen einer Empfangseinrichtung, einem Nutzungsschutzsteuergerät und mindestens einem betriebsnotwendigen Steuergerät ermöglicht,
wobei die Empfangseinrichtung von einer Zentrale ausgesandte Daten empfängt, deren Empfang den Betrieb des Fahrzeugs ermöglicht und deren Ausbleiben eine Außerbetriebnahme des mindestens einen betriebsnotwendigen Steuergeräts zur Folge hat,
wobei, die von der Zentrale ausgesandten Daten ein Freigabesignal enthalten,
wobei das Nutzungsschutzsteuergerät nach Ablauf bestimmter Meldekriterien ein Meldesignal über eine Sendeeinrichtung aussendet,
wobei die Zentrale nach dem Empfang des Meldesignals aufgrund vom Fahrzeug übermittelter aktueller Werte zumindest die einer Nutzungsbeschränkung unterliegenden Größen überprüft, und
wobei von der Zentrale ein Freigabesignal nur dann ausgesandt wird, wenn ein Überschreiten einer Nutzungsbeschränkung nicht vorliegt.

3. Verfahren nach Anspruch 2,
**dadurch gekennzeichnet,**
daß die vom Fahrzeug an die Zentrale übermittelten aktuellen Werte von Größen im Meldesignal enthalten sind.

4. Verfahren nach Anspruch 1 oder 2,
**dadurch gekennzeichnet,**
daß die Sendeeinrichtung und die Empfangseinrichtung in einem mobilen Kommunikationssystem zusammengefaßt sind.

5. Verfahren nach Anspruch 1 bis 4,
**dadurch gekennzeichnet,**
daß eine Funktionsüberprüfung zumindest der Kommunikationsstruktur, der Sendeeinrichtung, der Empfangseinrichtung und des Nutzungsschutzsteuergeräts durchgeführt wird, wobei eine Beeinträchtigung der Systemintegrität als Überschreiten einer Nutzungsbeschränkung gewertet wird.

6. Verfahren nach einem der Ansprüche 1 bis 5,
**dadurch gekennzeichnet,**
daß nach dem Überschreiten einer Nutzungsbeschränkung der weitere Betrieb des Fahrzeugs für eine Rest-Nutzung toleriert wird.

7. Verfahren nach Anspruch 6,
**dadurch gekennzeichnet,**
daß während der Rest-Nutzung des Fahrzeugs der Fahrer zur Verbindungsaufnahme mit der Zentrale aufgefordert wird.

8. Verfahren nach Anspruch 6,
**dadurch gekennzeichnet,**
daß während der Rest-Nutzung des Fahrzeugs eine Verbindung zwischen Fahrer und Zentrale hergestellt wird.

9. Verfahren nach einem der Ansprüche 1 bis 5,
**dadurch gekennzeichnet,**
daß dann wenn der Zentrale oder dem Fahrzeug keine Nutzungsbeschränkungen gemeldet sind ein Service-Modus aktiviert ist,
wobei während des Service-Modus eine bestimmte der möglichen Nutzungsbeschränkungen vorgegeben ist,
wobei die Nutzungsbeschränkung nicht erneuert oder erweitert werden kann und nur ein kurzzeitiger Betrieb des Fahrzeugs ermöglicht ist.

10. Verfahren nach einem der Ansprüche 1 bis 5, 7 oder 9,
**dadurch gekennzeichnet,**
daß in dem Fahrzeug mittels eines Ortungssystems ein aktueller Ort des Fahrzeugs bestimmt wird, und
daß zumindest beim Überschreiten einer Nutzungsbeschränkung ein den aktuellen Ort repräsentierendes Ortssignal über die Sendeeinrichtung ausgesendet wird.

11. Verfahren nach Anspruch 10,
**dadurch gekennzeichnet,**
daß während des Betriebs des Fahrzeugs im Service-Modus ständig ein Ortssignal ausgesendet wird.

12. Verfahren nach Anspruch 10,
**dadurch gekennzeichnet,**
daß insbesondere beim Vorliegen einer Rest-Nutzung periodisch in einer festgelegten zeitlichen Abfolge aktuelle Ortssignale ausgesendet werden.

13. Verfahren nach einem der Ansprüche 1 bis 5,
**dadurch gekennzeichnet,**
daß das Überschreiten der Nutzungsbeschränkung in einem Überschreiten eines vorgegebenen, von der Benutzung des Fahrzeugs unabhängigen Zeitintervalls besteht.

14. Verfahren nach einem der Ansprüche 1 bis 5, 13,
**dadurch gekennzeichnet,**
daß das Überschreiten der Nutzungsbeschränkung in einem Überschreiten einer vorgegebenen Betriebsdauer besteht.

15. Verfahren nach einem der Ansprüche 1 bis 5, 13 oder 14,
**dadurch gekennzeichnet,**
daß das Überschreiten der Nutzungsbeschränkung in einem Überschreiten einer vorgegebenen maximalen Fahrstrecke besteht.

16. Verfahren nach einem der Ansprüche 1 bis 5 oder 13 bis 15,
**dadurch gekennzeichnet,**
daß das Überschreiten der Nutzungsbeschränkung in einem Überschreiten einer vorgegebenen Anzahl von Inbetriebnahmen des Fahrzeugs besteht.

17. Verfahren nach einem der Ansprüche 1 bis 5 oder 13 bis 16,
**dadurch gekennzeichnet,**
daß das Überschreiten der Nutzungsbeschränkung in einem Verlassen oder Befahren eines bestimmten geographischen Gebiets besteht.

18. Verfahren nach einem der Ansprüche 1 bis 5,
**dadurch gekennzeichnet,**
daß bei der Inbetriebnahme des Fahrzeugs der zwischenzeitliche Eingang eines von der Zentrale empfangenen Sperrsignals überprüft wird, und
daß dann, wenn ein Sperrsignal empfangen wurde die Inbetriebnahme des Fahrzeugs durch Außerbetriebnahme mindestens eines betriebsnotwendigen Steuergeräts verhindert wird.

19. Verfahren nach Anspruch 18,
**dadurch gekennzeichnet,**
daß nach dem Empfang eines Sperrsignals eine Ortung des Fahrzeugs durchgeführt wird und daß zumindest einmal ein Ortssignal ausgesendet wird.

20. Verfahren nach einem der Ansprüche 1 bis 5,
**dadurch gekennzeichnet,**
daß nach einem Überschreiten einer Nutzungsbeschränkung durch von der Zentrale ausgesandte Nutzungserweiterungssignale die Wiederinbetriebnahme des Fahrzeugs durch Beenden der Außerbetriebnahme des mindestens einen betriebsnotwendigen Steuergeräts ermöglicht wird,
wobei gleichzeitig die Nutzungsbeschränkung des Fahrzeugs entsprechend erweitert wird.

21. Verfahren nach einem der Ansprüche 1 bis 5,
**dadurch gekennzeichnet,**
daß zur Wiederinbetriebnahme eines durch die Außerbetriebnahme von mindestens einem betriebsnotwendigen Steuergerät stillgesetzten Fahrzeugs, das Fahrzeug ein von der Zentrale ausgesendetes Betriebsfreigabesignal empfängt, wobei dann von dem Nutzungsschutzsteuergerät über die Kommunikationsstruktur die Außerbetriebnahme des mindestens einen betriebsnotwendigen Steuergeräts aufgehoben wird.

22. Verfahren nach Anspruch 21 oder einem der Ansprüche 1 bis 5,
**dadurch gekennzeichnet,**
daß zur Wiederinbetriebnahme eines durch die Außerbetriebnahme von mindestens einem betriebsnotwendigen Steuergerät stillgesetzten Fahrzeugs, fahrzeugseitig eine mit dem Nutzungsschutzsteuergerät verbundene Dateneingabeschnittstelle angeordnet ist, wobei zur Wiederinbetriebnahme des mindestens einen betriebsnotwendigen Steuergeräts zumindest die Eingabe eines als gültig erkannten Codes über die Dateneingabeschnittstelle erforderlich ist.

## Claims

1. Method for protecting vehicles, in particular leased vehicles or hire vehicles, against unauthorized use,
a communication structure making possible, at the vehicle end, the exchange of data at least between a receiving device, a use protection control unit and at least one operationally necessary control unit,
the receiving device receiving data broadcast by a master station, the reception of which data makes the operation of the vehicle possible and the absence of which results in a deactivation of the at least one operationally necessary control unit,
the data broadcast by the master station defining the use restrictions for the vehicle, and
the use protection control unit checking for the transgression of a use restriction,
the at least one operationally necessary control unit being deactivated if a transgression of a use restriction occurs.

2. Method for protecting vehicles, in particular leased vehicles or hire vehicles, against unauthorized use,
a communication structure making possible, at the vehicle end, the exchange of data at least between a receiving device, a use protection control unit and at least one operationally necessary control unit,
the receiving device receiving data broadcast by a master station, the reception of which data makes the operation of the vehicle possible and the absence of which results in a deactivation of the at least one operationally necessary control unit,
the data broadcast by the master station containing an enabling signal,
after specific reporting criteria have expired, the use protection control unit broadcasting a status signal via a transmitting device,
the master station checking, after the reception of the status signal, at least the variables which are subject to a use restriction, on the basis of current values transmitted from the vehicle, and
an enabling signal being broadcast by the master station only if a transgression of a use restriction has not occurred.

3. Method according to Claim 2, characterized in that the current values of variables transmitted from the vehicle to the master station are contained in the status signal.

4. Method according to Claim 1 or 2, characterized in that the transmitting device and the receiving device are combined in a mobile communication system.

5. Method according to Claim 1 to 4, characterized in that a function check at least of the communication structure, the transmitting device, the receiving device and the use protection control unit is carried out, degradation of the system integrity being evaluated as transgression of a use restriction.

6. Method according to one of Claims 1 to 5, characterized in that, after the transgression of a use restriction, the further operation of the vehicle is tolerated for a residual use.

7. Method according to Claim 6, characterized in that, during the residual use of the vehicle, the driver is requested to establish a connection to the master station.

8. Method according to Claim 6, characterized in that, during the residual use of the vehicle, a connection is established between driver and master station.

9. Method according to one of Claims 1 to 5, characterized in that, if no use restrictions are signalled to the master station or to the vehicle, a service mode is activated, a specific use restriction of the possible use restrictions being prescribed during the service mode, it being impossible for the use restriction to be renewed or extended and only brief operation of the vehicle being made possible.

10. Method according to one of Claims 1 to 5, 7 or 9, characterized in that a current location of the vehicle is determined in the vehicle by means of a locating system, and
at least when a use restriction is transgressed, a locating signal which represents the current location is broadcast via the transmitting device.

11. Method according to Claim 10, characterized in that a locating signal is continuously broadcast while the vehicle is operating in the service mode.

12. Method according to Claim 10, characterized in that, in particular when a residual use is taking place, current locating signals are periodically broadcast in a fixed chronological sequence.

13. Method according to one of Claims 1 to 5, characterized in that the transgression of the use restriction consists in a prescribed time interval which is independent of the use of the vehicle being exceeded.

14. Method according to one of Claims 1 to 5, 13, characterized in that the transgression of the use restriction consists in a prescribed operating period being exceeded.

15. Method according to one of Claims 1 to 5, 13 or 14, characterized in that the transgression of the use restriction consists in a prescribed maximum distance travelled being exceeded.

16. Method according to one of Claims 1 to 5 or 13 to 15, characterized in that the transgression of the use restriction consists in a prescribed number of activations of the vehicle being exceeded.

17. Method according to one of Claims 1 to 5 or 13 to 16, characterized in that the transgression of the use restriction consists in leaving or entering a specific geographical area.

18. Method according to one of Claims 1 to 5, characterized in that, when the vehicle is activated, it is checked whether a disabling signal has been received from the master station in the meantime, and
in that, if a disabling signal has been received, the activation of the vehicle is prevented by the deactivation of at least one operationally necessary control unit.

19. Method according to Claim 18, characterized in that, after the reception of a disabling signal, a vehicle-locating process is performed, and in that a locating signal is broadcast at least once.

20. Method according to one of Claims 1 to 5, characterized in that, after a transgression of a use restriction, the reactivation of the vehicle is made possible by use extension signals broadcast by the master station, by the termination of the deactivation of the at least one operationally necessary control unit,
the use restriction of the vehicle being appropriately extended at the same time.

21. Method according to one of Claims 1 to 5, characterized in that for reactivating a vehicle which has been disabled by the deactivation of at least one operationally necessary control unit, the vehicle receives an operation enabling signal broadcast by the master station, the deactivation of the at least one operationally necessary control unit then being cancelled by the use protection control unit via the communication structure.

22. Method according to Claim 21 or one of Claims 1 to 5, characterized in that for reactivating a vehicle which has been disabled by the deactivation of at least one operationally necessary control unit, a data input interface which is connected to the use protection control unit is arranged at the vehicle end, at least the inputting of a code, which has been detected as valid, via the data input interface being required in order to reactivate the at least one operationally necessary control unit.

## Revendications

1. Procédé pour protéger des véhicules, en particulier des véhicules de location avec ou sans option d'achat, contre une utilisation non-autorisée, selon lequel, côté véhicule, une structure de communication permet l'échange de données au moins entre un dispositif de réception, un appareil de commande de sécurité d'utilisation et au moins un appareil de commande nécessaire au fonctionnement,
selon lequel le dispositif de réception recoit des données émises par un central, dont la réception permet le fonctionnement du véhicule et dont la non-réception entraîne une mise hors service dudit au moins un appareil de commande nécessaire au fonctionnement, selon lequel les données émises par le central définissent les limites d'utilisation du véhicule et
selon lequel l'appareil de commande de sécurité d'utilisation contrôle le dépassement d'une limite d'utilisation, ledit au moins unappareil de commande nécessaire au fonctionnement étant mis hors service lorsqu'il existe un dépassement d'une limite d'utilisation.

2. Procédé pour protéger des véhicules, en particulier des véhicules de location avec ou sans option d'achat, contre une utilisation non-autorisée, selon lequel, côté véhicule, une structure de communication permet l'échange de données au moins entre un dispositif de réception, un appareil de commande de sécurité d'utilisation et au moins un appareil de commande nécessaire au fonctionnement,
selon lequel le dispositif de réception reçoit des données émises par un central, dont la réception permet le fonctionnement du véhicule et dont la non-réception entraîne une mise hors service dudit au moins un appareil de commande nécessaire au fonctionnement,
selon lequel les données émises par le central contiennent un signal de libération,
selon lequel l'appareil de commande de sécurité d'utilisation, après que des critères déterminés de signalisation ont été satisfaits, émet par un dispositif d'émission un signal indicateur,
selon lequel le central, après la réception du signal indicateur, contrôle au moins, sur la base de valeurs actuelles transmises par le véhicule, les grandeurs soumises à une limite d'utilisation et
où par le central est émis un signal de libération lorsqu'il n'existe pas de dépassement de limite d'utilisation.

3. Procédé selon la revendication 2, caractérisé en ce que les valeurs actuelles de grandeurs transmises par le véhicule au central sont contenues dans le signal indicateur.

4. Procédé selon la revendication 1 ou 2, caractérisé en ce que le dispositif d'émission et le dispositif de réception sont rassemblés dans un dispositif mobile de communication.

5. Procédé selon les revendications 1 à 4, caractérisé en ce qu'un contrôle du fonctionnement d'au moins la structure de communication, le dispositif d'émission, le dispositif de réception et l'appareil de commande de sécurité d'utilisation est effectué, une altération de l'intégrité du système étant évaluée comme le dépassement d'une limite d'utilisation.

6. Procédé selon une des revendications 1 à 5, caractérisé en ce que, à la suite du dépassement d'une limite d'utilisation, le fonctionnement consécutif du véhicule est toléré dans le cadre d'une utilisation résiduelle.

7. Procédé selon la revendication 6, caractérisé en ce que, pendant l'utilisation résiduelle du véhicule, le conducteur est prié d'entrer en liaison avec le central.

8. Procédé selon la revendication 6, caractérisé en ce que, pendant l'utilisation résiduelle du
véhicule, une liaison est établie entre le conducteur et le central.

9. Procédé selon une des revendications 1 à 5, caractérisé en ce que, lorsque le central ou le véhicule n'est pas informé de limites d'utilisation, un mode de service est activé, mode pendant lequel une limite déterminée des limites d'utilisation possibles est préfixée, la limite d'utilisation ne pouvant pas être renouvelée ou étendue et seulement un fonctionnement de courte durée du véhicule étant possible.

10. Procédé selon une des revendications 1 à 5, 7 ou 9, caractérisé en ce que, au moyen d'un système de localisation, un lieu où le véhicule se trouve actuellement est déterminé dans le véhicule, et que, au moins au dépassement d'une limite d'utilisation, un signal de position représentant le lieu actuel est émis au moyen du dispositif d'émission.

11. Procédé selon la revendication 10, caractérisé en ce qu'un signal de position est émis en permanence pendant le fonctionnement du véhicule dans le mode de service.

12. Procédé selon la revendication 10, caractérisé en ce que des signaux de position actuels sont émis périodiquement, selon une succession dans le temps fixée, en particulier lors d'une utilisation résiduelle.

13. Procédé selon une des revendications 1 à 5, caractérisé en ce que le dépassement de la limite d'utilisation consiste en un dépassement d'un intervalle de temps donné, indépendant de l'utilisation du véhicule.

14. Procédé selon une des revendications 1 à 5 et 13, caractérisé en ce que le dépassement de la limite d'utilisation consiste en un dépassement d'une durée de fonctionnement préfixée.

15. Procédé selon une des revendications 1 à 5, 13 ou 14, caractérisé en ce que le dépassement de la limite d'utilisation consiste en un dépassement d'un parcours maximal préfixé.

16. Procédé selon une des revendications 1 à 5 ou 13 à 15, caractérisé en ce que le dépassement de la limite d'utilisation consiste en un dépassement d'un nombre préfixé de mises en marche du véhicule.

17. Procédé selon une des revendications 1 à 5 ou 13 à 16, caractérisé en ce que le dépassement de la limite d'utilisation consiste à quitter ou à circuler dans une région géographique déterminée.

18. Procédé selon une des revendications 1 à 5, caractérisé en ce que, à la mise en marche du véhicule, l'arrivée, entretemps, d'un signal de blocage recu du central est contrôlée et que, si un signal de blocage a été reçu, la mise en marche du véhicule est empêchée par la mise hors service d'au moins un appareil de commande nécessaire au fonctionnement.

19. Procédé selon la revendication 18, caractérisé en ce que, à la suite de la réception d'un signal de blocage, une localisation du véhicule est effectuée et qu'un signal de position est émis au moins une fois.

20. Procédé selon une des revendications 1 à 5, caractérisé en ce que, à la suite d'un dépassement d'une limite d'utilisation, la remise en marche du véhicule est rendue possible du fait qu'il est mis fin à la mise hors service dudit au moins un appareil de commande nécessaire au fonctionnement au moyen de signaux d'extension d'utilisation émis par le central, la limitation de l'utilisation du véhicule étant en même temps étendue en conséquence.

21. Procédé selon une des revendications 1 à 5, caractérisé en ce que, pour la remise en marche d'un véhicule arrêté par la mise hors service d'au moins un appareil de commande nécessaire au fonctionnement, le véhicule reçoit un signal de libération de fonctionnement, émis par le central, à la suite duquel l'appareil de commande de sécurité d'utilisation supprime, par l'intermédiaire de la structure de communication, la mise hors service dudit au moins un appareil de commande nécessaire au fonctionnement.

22. Procédé selon la revendication 21 ou l'une des revendications 1 à 5, caractérisé en ce que, pour la remise en marche d'un véhicule arrêté par la mise hors service d'au moins un appareil de commande nécessaire au fonctionnement, une interface d'introduction de données, connectée à l'appareil de commande de sécurité d'utilisation, est disposée côté véhicule, la remise en service dudit au moins un appareil de commande nécessaire au fonctionnement demandant au moins l'introduction, par l'interface d'introduction de données, d'un code reconnu valable.
